Europäisches Patentamt

European Patent Office

Office européen des brevets

(11) Veröffentlichungsnummer: **0 249 899 B1**

## (12) EUROPÄISCHE PATENTSCHRIFT

(45) Veröffentlichungstag der Patentschrift: **29.04.92**

(51) Int. Cl.5: **A21C 9/08**, A21C 9/00

(21) Anmeldenummer: **87108474.5**

(22) Anmeldetag: **12.06.87**

Die Akte enthält technische Angaben, die nach dem Eingang der Anmeldung eingereicht wurden und die nicht in dieser Patentschrift enthalten sind.

(54) **Gebäckherstellungsanlage.**

(30) Priorität: **20.06.86 DE 3620649**
**21.07.86 DE 3624603**

(43) Veröffentlichungstag der Anmeldung:
**23.12.87 Patentblatt 87/52**

(45) Bekanntmachung des Hinweises auf die Patenterteilung:
**29.04.92 Patentblatt 92/18**

(84) Benannte Vertragsstaaten:
**AT FR IT NL**

(56) Entgegenhaltungen:
**DE-A- 1 215 073**
**DE-A- 2 346 577**
**DE-A- 2 361 043**
**FR-A- 2 007 744**
**FR-A- 2 323 328**

(73) Patentinhaber: **Grubelnik Maschinenbau für Bäckereitechnik GmbH**
**Am Werbering 2a**
**W-8011 Kirchheim/Heimstetten(DE)**

(72) Erfinder: **Grubelnik, Hans**
**Waldschulstrasse 44**
**W-8000 München 82(DE)**

(74) Vertreter: **Zinnecker, Armin, Dipl.-Ing. Lorenz-Seidler-Gossel et al**
**Widenmayerstrasse 23**
**W-8000 München 22(DE)**

EP 0 249 899 B1

**Beschreibung**

Die Erfindung betrifft eine Gebäckherstellungsanlage nach dem Oberbegriff des Anspruchs 1.

Eine derartige Gebäckherstellungsanlage ist in der DE-A-1 215 073 bekannt. Die vorbekannte Gebäckherstellungsanlage eignet sich dazu, eine bestimmte Sorte Gebäck herzustellen. Für jede Gebäcksorte wird also eine eigene Anlage benötigt. Der Einsatz einer derartigen vorbekannten Anlage ist also nur dann wirtschaftlich sinnvoll, wenn hohe Herstellungs-Stückzahlen pro Sorte erreicht werden, die wiederum nur von großen Herstellungsbetrieben erzielt werden können.

Aus der DE-A-2 361 043 ist eine Gebäckherstellungsanlage bekannt, die ein verschwenkbares Transportband aufweist. Durch dieses Transportband können die Teigstücke entweder in die Teigtaschen eines Mehrfachgehänges gelangen und anschließend den Gärschrank durchlaufen oder auf ein weiteres Transportband gelangen, von wo sie einer Einschlagstation und anschließend einer Ausrollstation zugeführt werden.

Aufgabe der Erfindung ist es daher, eine Gebäckherstellungsanlage der eingangs genannten Art zu schaffen, mit der mehrere verschiedene Sorten Backwerk auf einfache Weise mit einer Anlage hergestellt werden können.

Erfindungsgemäß wird diese Aufgabe durch die im kennzeichnenden Teil des Anspruchs 1 angegebenen Merkmale gelöst. Die Übergabestation ist in mehrere Positionen zur Beschickung mehrerer Weiterverarbeitungsstationen höhenverschieblich. Wenn die geforderte Stückzahl für eine Sorte erreicht ist, kann die Übergabestation in eine andere Position verfahren werden, in der sie eine andere Weiterverarbeitungsstation zur Herstellung einer zweiten Sorte beschickt. Als herzustellende Sorten kommen beispielsweise in Betracht ungewirkte Teigstücke, gewirkte Teigstücke, Brezen, gestüpfelte Teigstücke, gärunterbrochene Teigstücke und/oder fertig gegärte Teigstücke.

Vorteilhafte Weiterbildungen der Erfindung sind in den Unteransprüchen beschrieben.

Nachfolgend wird ein Ausführungsbeispiel der Erfindung anhand der beigefügten Zeichnung im einzelnen beschrieben. In der Zeichnung zeigt

Fig. 1    eine Seitenansicht der Gebäckherstellungsanlage mit einem Teil des Vorgärschrankes, der Übergabestation und einem Teil des Nachgärschrankes,

Fig. 2    eine Seitenansicht der Übergabestation,

Fig. 3    eine Ansicht von oben der in Fig. 2 dargestellten Übergabestation,

Fig. 4    eine Seitenansicht der Übergabestation im montierten Zustand,

Fig. 5    eine Ansicht von oben bzw. ein Schnitt durch Fig. 4 und

Fig. 6    eine Vorderansicht des Gestells mit der darin befindlichen Ubergabestation.

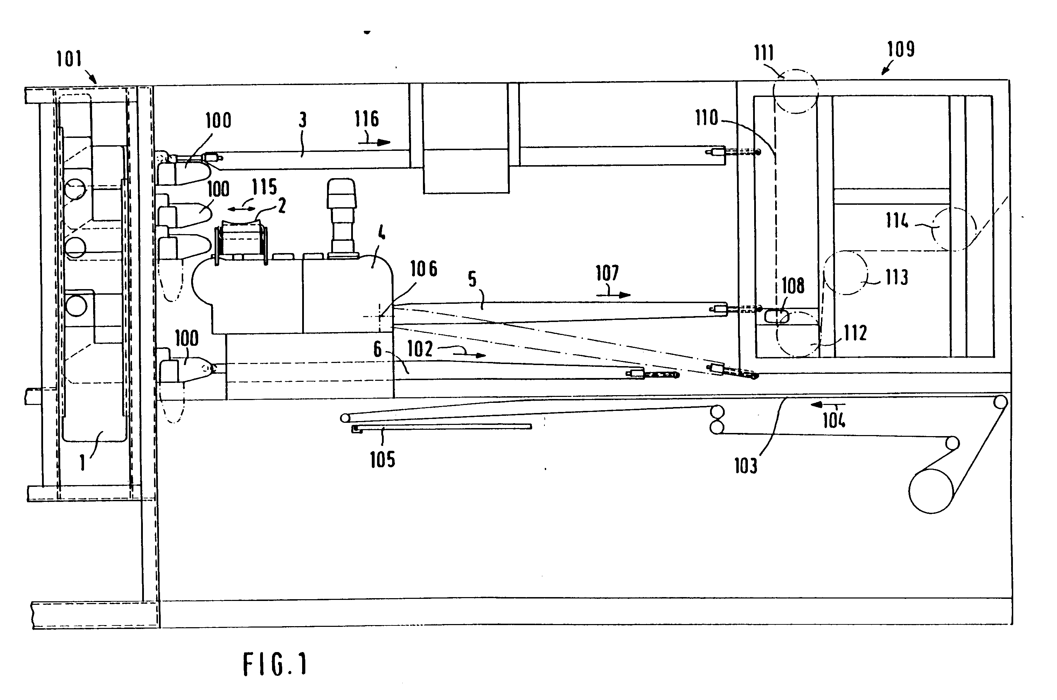

Wie in Fig. 1 dargestellt, ist die Ubergabestation 100 in einem Gestell 101 höhenverschieblich geführt. Das Gestell 101 ist ein Teil des Vorgärschrankes, in dem die Teigstücke vorgegart werden. Die Teigstücke befinden sich dabei in Gehängen, in denen sie nebeneinander liegen. Die Gehänge sind auf beiden Seiten mit Zapfen versehen, die in Rollenketten eingreifen. Die endlosen Rollenketten werden von einem Motor angetrieben und durch Umlenkrollen umgelenkt. Wenn ein Gehänge mit den Teigstücken den Vorgär- schrank durchlaufen hat, werden die Teigstücke vom Gehänge an die Ubergabestation 100 übergeben. In Fig. 1 ist die Ubergabestation 100 in vier Positionen Pos. 1, Pos. 2, Pos. 3 und Pos. 4 dargestellt. Abhängig von der Position der Ubergabestation 100 werden verschiedene Weiterverarbeitungs- stationen beschickt. In der untersten Position (Pos. 1) werden die Teigstücke von der Ubergabestation 100 auf ein Transportband 6 für ungewirkte Teigstücke übergeben. Sie bewegen sich auf dem Transportband 6 in Richtung des Pfeiles 102. Am Ende des Transportbandes 6 fallen sie auf das endlose Transportband 103, auf dem sie in Richtung des Pfeiles 102. Am Ende des Transportbandes 6 fallen sie auf das endlose Transportband 103, auf dem sie in Richtung des Pfeiles 104, also entgegen der Richtung des Pfeiles 102, gefördert werden. Anschliessend werden die Teigstücke an das Backblech 105 übergeben. Sobald dieses Backblech 105 gefüllt ist, kann es entlang der Winkeleisen, auf denen es gelagert ist, entnommen werden.

In der Pos. 2 der Ubergabestation 100 werden die Teigstücke an die Stüpfelstation 4 übergeben. Die Teigstücke werden in der Stüpfelstation 4 gestüpfelt und anschliessend zu dem verstellbaren Spreizband 5 gefördert. Das Spreizband 5 ist um die Achse 106 schwenkbar gelagert. Wenn sich das verstellbare Spreizband 5 in der unteren, strichpunktiert gezeichneten Stellung befindet, werden die Teigstücke nach dem Stüpfeln auf das Transportband 103 übergeben und anschliessend in derselben Weise behandelt, wie oben bei der Diskussion der Pos. 1 der Ubergabestation 100 beschrieben. Wenn sich das verstellbare Spreizband 5 in der durchgezogen gezeichneten, oberen Stellung befindet, werden die Teigstücke nach dem Stüpfeln in den Nachgärschrank 109 übergeben. Die Teigstücke bewegen sich also auf dem Spreizband 5 in Richtung des Pfeiles 107 und bewegen sich am Ende des Spreizbandes in ein Gehänge 108 des Nachgärschrankes 109. Das Gehänge weist in der zur Zeichenebene der Fig. 1 senkrech-

2

ten Richtung eine Längserstreckung auf, die dafür ausreicht, daß fünf Teigstücke nebeneinander Platz haben. Dementsprechend breit ist auch das verstellbare Spreizband 5, das Transportband 6 für ungewirkte Teigstücke, die Stüpfelstation 4, das Transportband 103, das Transportband 3 und die Ubergabestation 100 sowie die Gehänge im Vorgärschrank. Die Enden der Gehänge 108 des Nachgärschrankes 109 sind zapfenförmig ausgebildet. Die Zapfen greifen in Rollen der in Fig. 1 strichpunktiert angedeuteten Rollenkette 110, die durch Umlenkrollen 111 bis 114 umgelenkt werden.

Wenn sich die Ubergabestation 100 in der Position 3 befindet, werden die aus dem Vorgärschrank kommenden Teigstücke an das Austragungsband 2 für Brezen übergeben. Das Austragungsband 2 ist in Richtung des Doppel- pfeiles 115 hin-und herverschieblich. Das Band erstreckt sich in die zur Zeichenebene der Fig. 1 senkrechte Richtung. Auf ihm sind die Teigstücke in einer Reihe hintereinander angeordnet.

Wenn sich die Ubergabestation 100 in der Pos. 4, also in der obersten Position befindet, werden die Teigstücke an das Transportband 3 für ungewirkte Teigstücke in den Nachgärschrank 109 übergeben. Die Teigstücke werden auf dem Transportband 3 in Richtung des Pfeiles 116 bewegt und am Ende des Transportbandes 3 in Gehänge des Nachgärschrankes übergeben.

Die in Fig. 1 dargestellte Gebäckherstellungsanlage gestattet also fünf verschiedene Betriebsweisen bzw. Herstellungsarten:

(1) Ubergabestation 100 in Position 1:
Herstellung ungewirkter, gärunterbrochener Teigstücke. Die Gärung ist unterbrochen, da die Teigstücke zwar den Vorgärschrank 101 durchlaufen, nicht jedoch den Nachgärschrank 109.

(2) Ubergabestation 100 in Position 2 und verstellbares Spreizband 5 in unterer Position:
Herstellung gewirkter bzw. gestüpfelter, gärunterbrochener Teigstücke.

(3) Ubergabestation 100 in Position 2 und verstellbares Spreizband 5 in oberer Position:
Herstellung gewirkter bzw. gestüpfelter, und nicht gärunterbrochener, d.h. vollgegarter Teigstücke.

(4) Ubergabestation 100 in Position 3:
Herstellung von Brezen, Hörnchen, Laugenstangen usw.

(5) Ubergabestation 100 in Position 4:
Herstellung ungewirkter und nicht gärunterbrochener, also vollgegarter Teigstücke.

Wenn von einer der soeben angegebenen Herstellungsarten auf eine andere übergegangen werden soll, wird einfach die Ubergabestation 100 in die gewünschte Position gefahren, und eine neue Sorte Teigstücke kann hergestellt werden. Befindet sich die Ubergabestation 100 in Position 1, und soll die Position 2 angefahren werden, so ist es erforderlich, das vordere Teil der Ubergabestation 100 abzuklappen, wie dies strichpunktiert dargestellt ist, um zu verhindern, daß dieses vordere Teil der Ubergabestation 100 an der Stüpfelstation 4 anstösst. Der vordere Teil der Ubergabestation 100 wird also abgeklappt, wenn sich die Ubergabestation 100 in der Position 1 befindet. Anschliessend wird die Ubergabestation 100 bis in die Postion 3 nach oben verfahren. Dort wird der vordere Teil der Ubergabestation 100 wieder nach oben in die durchgezogen gezeichnete Stellung geklappt. Anschliessend kann die Ubergabestation 100 in die Position 2 gefahren werden. Von der Position 2 aus können die Positionen 3 und 4 ohne weiteres angefahren werden. Will man von Position 4 oder von Position 3 ausgehend die Position 1 anfahren, so muß man das vordere Teil der Ubergabestation 100 wieder abklappen, um an der Stüpfelstation 4 vorbeizukommen. Nach Erreichen der Position 1 kann das vordere Teil wieder hochgeklappt werden. Die hochfahrbare Ubergabestation 100 ist mit Endschaltern so abgesichert, daß eine Kollision des vorderen Teils der Ubergabestation 100 mit der Stüpfelstation verhindert wird.

Die Ubergabestation 100 umfasst den Rahmen 1, der im Rahmen 101 des Vorgärschrankes höhenverschieblich geführt ist.

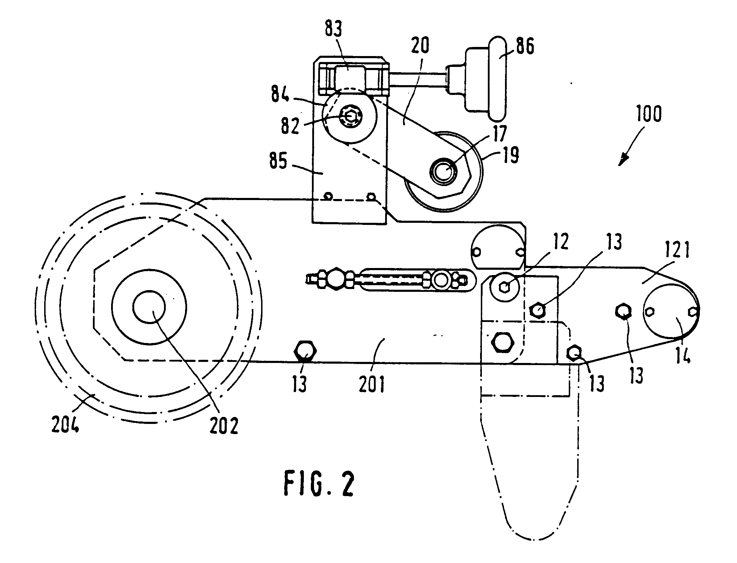

In Fig. 2 ist die Ubergabestation 100 im einzelnen dargestellt. Sie besitzt jeweils ein rechtes und linkes Seitenteil 201, die durch Distanzachsen 13 miteinander verbunden sind. Der vordere Teil 121 der Ubergabestation 100 ist um die Welle 12 schwenkbar gelagert. Dieser vordere Teil 121 kann die beiden in Figur 2 dargestellten Positionen einnehmen, also die durchgezogen gezeichnete Stellung und die abgeschwenkte strichpunktiert gezeichnete Stellung. In jeder dieser Stellungen wird der vordere Teil 121 durch eine geeignete Feststellvorrichtung gehalten. An die Seitenteile 201 sind Laschen 85 angeschraubt. Die Laschen 85 werden durch eine Achse 82 miteinander verbunden, um welche Lagerarme 20 drehbar gelagert sind. Die Lagerarme tragen eine Rolle 19, die um die Achse 17 drehbar gelagert ist. Eine Schnecke 83 greift in das Schneckenrad 84 ein, welches mit den Laschen 85 verbunden ist. Die Schnecke 83 ist mit dem Handrad 86 drehfest verbunden ist. Durch eine Drehung am Handrad 86 wird also die Schnecke 83 gedreht und dadurch das Schneckenrad 84 gedreht, so daß die Lagerarme 20 mit dem Rohr 19 um die Achse 82 verschwenkt werden. In den Seitenteilen 201 ist weiterhin die Welle 202 gelagert, die mit den Kettenrädern 204, 205 drehfest verbunden ist.

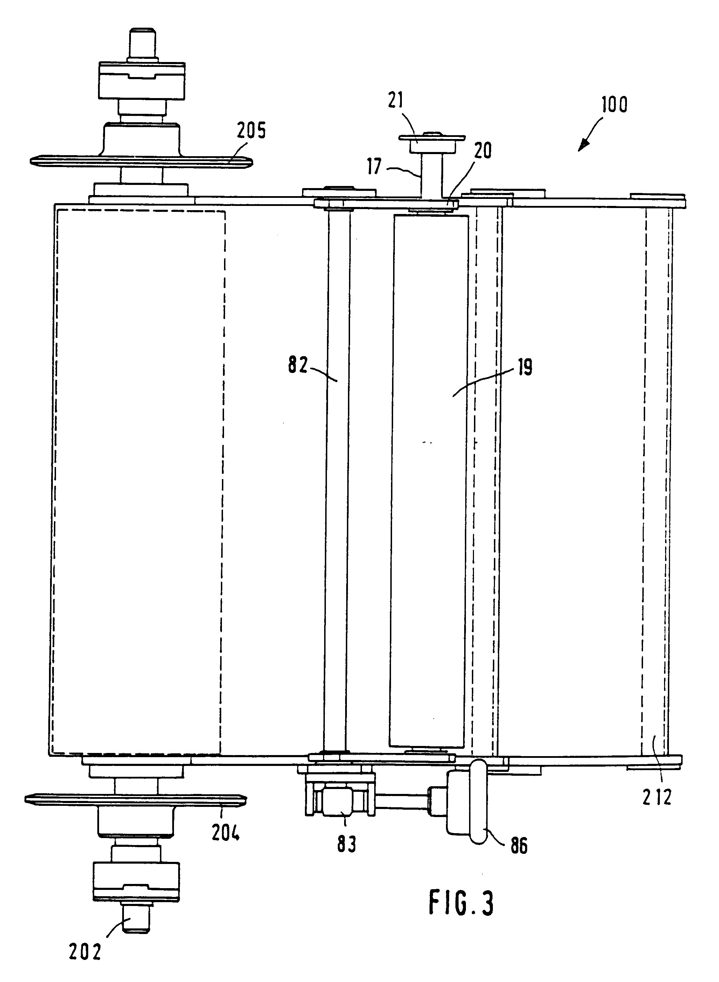

Figur 3 zeigt die in Figur 2 dargestellte Ubergabestation 100 von oben. Dabei sind gleiche Teile mit gleichen Bezugsziffern versehen. Das Rohr 19 kann durch das Kettenrad 21 angetrieben werden.

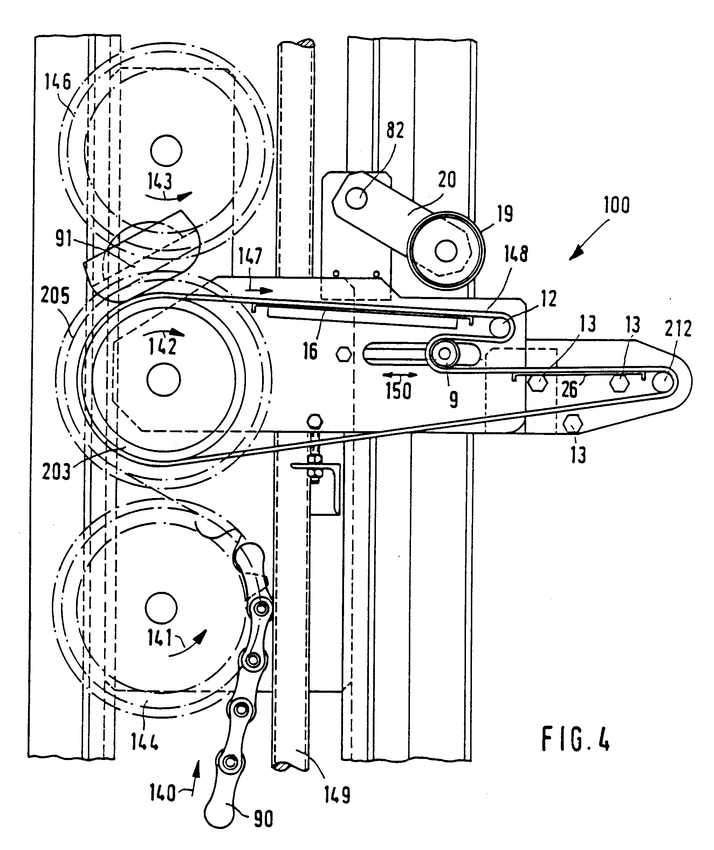

Figur 4 zeigt die Ubergabestation 100 im eingebauten Zustand. Die Hohlbolzenkette 90 des Vorgärschranks bewegt sich in Richtung des Pfeiles 140. Zwischen den Hohlbolzenketten 90 befinden sich die Gehänge 91, von denen in der Figur 4 nur eines dargestellt ist. Die Kette 90 durchläuft zunächst ein erstes Kettenrad 144 und dreht dieses in Richtung des Pfeiles 141. Anschließend durchläuft die Kette 90 ein Kettenrad 205, das sich in Richtung des Pfeiles 142 dreht, und schließlich ein Kettenrad 146, das sich in Richtung des Pfeiles 143 dreht. Die zwischen den Ketten befindlichen Gehänge sind derart in den Hohlbolzenketten gelagert, daß sie stets eine nach unten weisende Lage einnehmen. In Ihnen befinden sich die Teigstücke, die aufgrund dieser Aufhängung nicht herausfallen können. Wenn nun das Gehänge in den Bereich der Kettenräder 204, 205 gelangt, wird die Oberseite des Gehänges an die Walze 203 gedrückt. Das Gehänge kann sich also nicht mehr frei pendelnd bewegen, sondern folgt der Bewegung der Walze 203. Dadurch wird im weiteren Verlauf das Gehänge um annähernd 180° gedreht, bis es sich in der in der Figur 4 gezeichneten Stellung (Bezugszeichen 91) befindet. Bis dorthin sind die Teigstücke zwischen der Auflage im Gehänge und der Walze 203 eingeklemmt bzw. festgelegt. Unmittelbar daran anschließend fallen die Teigstücke aus dem Gehänge 91 heraus auf das endlose Transportband 148 der Ubergabestation 100. Dieses Transportband 148 bewegt sich in Richtung des Pfeiles 147. Ein Durchhängen des Transportbandes 148 wird durch die Gleitbleche 16 und 26 verhindert. Das Transportband 148 umschlingt die Welle 12, die Spannwalze 9 und die Welle 212. Die Spannwalze 9 ist in Richtung des Doppelpfeils 150 hin- und herverschiebbar. Sie kann in der Stellung festgelegt werden, in der sich die richtige Bandspannung ergibt. Das Rohr 19 kann um die Achse 82 verschwenkt werden. Die Schwenkstellung des Rohres 19 wird durch das Handrad 86 (siehe Figur 2) eingestellt. Dieses Handrad besitzt eine Positionsanzeige, die auf einfache Weise die Kontrolle der Schwenkstellung und damit der Höhenstellung des Rohres 19 gestattet. Durch die Gleitbleche 16 und 26 und die Umschlingung des Transportbandes 148 um die Welle 12 und um die Spannwalze 9 wird eine Stufe gebildet. Die Teigstücke fallen also vom Niveau des Gleitblechs 16 auf das Niveau des Gleitblechs 26 herab. Je nach Stellung des Rohres 19 werden die Teigstücke dabei gewendet oder nicht.

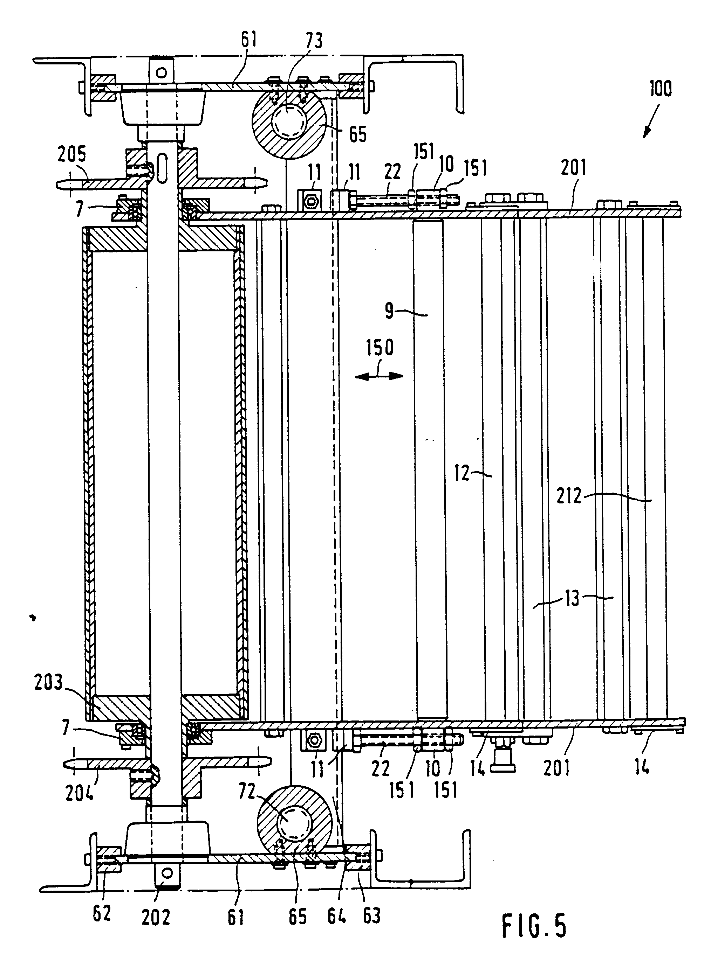

Figur 5 zeigt einen Schnitt durch Figur 4. Gleiche Teile haben dabei wieder gleiche Bezugszeichen. Die Lagerringe 7 gehören zur Walze 203. Zur Ubergabestation 100 gehören die Seitenteile 61, die miteinander und mit den Seitenteilen 201 durch die Stütze 64 verbunden sind. Die Seitenteile 61 sind in Führungsleisten 62 und 63 höhenverschieblich geführt. Die Seitenteile 61 sind weiterhin mit Spindelmuttern 65 verschraubt, die in Spindeln 72, 73 eingreifen. Durch eine Drehung der Spindeln 72, 73 bewegen sich also die Spindelmuttern 65 gleichsinnig nach oben oder nach unten. Mit den Spindelmuttern bewegen sich die Seitenteile 61 und damit die gesamte Ubergabestation. Die Spannwalze 9 ist in Richtung des Doppelpfeils 150 verschiebbar. Sie ist mit dem Distanzrohr 10 verbunden, in welches zwei Gewindestangen 22 eingreifen. Wenn die Muttern 151 gelöst werden, kann die Spannwalze 9 in die gewünschte Stellung verschoben werden. Anschließend werden die Muttern 151 auf der Gewindestange 22 wieder festgezogen.

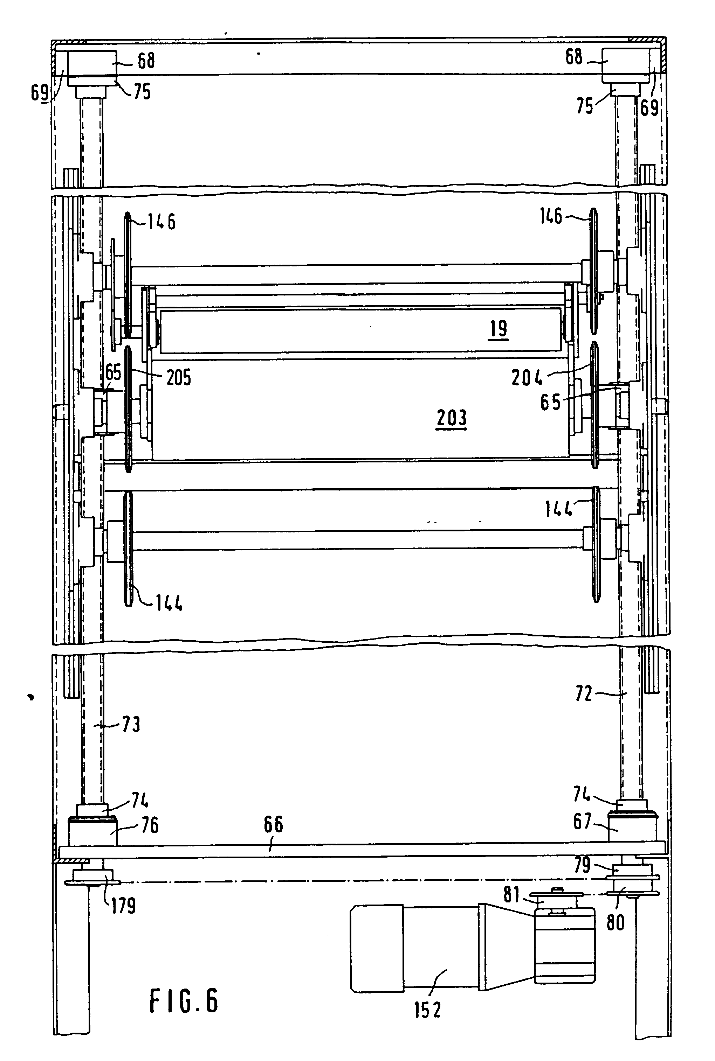

Figur 6 ist eine Vorderansicht von Figur 4 bzw. von Figur 5. Der Schneckengetriebemotor 152 treibt die Gewindespindeln 72 und 73 an. Am Ausgang des Schneckengetriebemotors 152 befindet sich das Kettenrad 81, welches über eine strichpunktiert angedeutete Kette das Kettenrad 80 im Verhältnis 1 : 1 antreibt. Gleichsinnig mit dem Kettenrad 80 dreht sich das Kettenrad 79, welches über eine Strichpunktiert angedeutete Kette das Kettenrad 179 antreibt. Mit dem Kettenrad 80 bzw. mit dem Kettenrad 79 ist die Gewindespindel 72 drehfest verbunden. Mit dem Kettenrad 179 ist die Gewindespindel 73 drehfest verbunden. Die Gewindespindeln 72 und 73 drehen sich also im gleichen Drehsinn und mit gleicher Geschwindigkeit. Die Gewindespindel 72 ist in Lagerbüchsen 67 und 68, die mit Lagerdeckeln 74 und 75 versehen sind, drehbar gelagert. Gleiches gilt für die Gewindespindel 73. In die Spindeln 72 und 73 greift jeweils eine Spindelmutter 65 ein. Eine Betätigung des Schneckengetriebemotors 152 und damit der Spindeln 72 und 73 zum Hochfahren bzw. Niederfahren der Ubergabestation 100 ist nur dann möglich, wenn auch der Hauptmotor des Vorgärschranks läuft. Anderenfalls könnten im Vorgärschrank befindliche Gehänge beim Niederfahren der Ubergabestation beschädigt werden.

**Patentansprüche**

1. Gebäckherstellungsanlage, bei der die gewirkten oder ungewirkten Teigstücke vom Vorgärschrank (101) durch eine Übergabestation (100) zu einer Weiterverarbeitungsstation (6; 4; 2; 3, 109) übergeben werden, **dadurch gekennzeichnet,** daß die Übergabestation (100) in mehrere Positionen zur Beschickung mehrerer Weiterverarbeitungsstationen (6; 4; 2; 3, 109) höhenverschieblich ist.

2. Gebäckherstellungsanlage nach Anspruch 1, dadurch gekennzeichnet, daß die Verstellung der Übergabestation (100) durch mindestens eine Spindel (72, 73) erfolgt, in die mindestens eine Spindelmutter (65), die mit der Übergabestation verbunden ist, eingreift.

3. Gebäckherstellungsanlage nach einem der vorhergehenden Ansprüche, dadurch gekennzeichnet, daß eine Weiterverarbeitungsstation von einem Transportband (6) für ungewirkte Teigstücke gebildet wird, welches die Teigstücke gegebenenfalls über ein weiteres Transportband (103) an mindestens ein Backblech (105) übergibt.

4. Gebäckherstellungsanlage nach einem der vorhergehenden Ansprüche, dadurch gekennzeichnet, daß eine Weiterverarbeitungsstation durch ein Austragsband (2) gebildet wird, welches sich horizontal und senkrecht zur Bewegungsrichtung der Übergabestation (100) bewegt.

5. Gebäckherstellungsanlage nach einem der vorhergehenden Ansprüche, dadurch gekennzeichnet, daß eine Weiterverarbeitungsstation von einer Stüpfelstation (4) gebildet wird.

6. Gebäckherstellungsanlage nach Anspruch 5, dadurch gekennzeichnet, daß sich an die Stüpfelstation (4) ein Transportband (5) anschließt, welches die Teigstücke zum Nachgärschrank transportiert.

7. Gebäckherstellungsanlage nach Anspruch 5 oder 6, dadurch gekennzeichnet, daß sich an die Stüpfelstation (4) ein Transportband (5) anschließt, welches die Teigstücke gegebenenfalls über ein weiteres Transportband (103) zu mindestens einem Backblech (105) transportiert.

8. Gebäckherstellungsnanlage nach Anspruch 6 oder 7, dadurch gekennzeichnet, daß das an die Stüpfelstation (4) sich anschließende Transportband (5) um eine horizontale Achse (106) schwenkbar gelagert ist, um die Teigstücke entweder an den Nachgärschrank oder an mindestens ein Backblech zu übergeben.

9. Gebäckherstellungsanlage nach einem der vorhergehenden Ansprüche, dadurch gekennzeichnet, daß eine Weiterverarbeitungsstation durch ein Transportband (3) für ungewirkte Teigstücke gebildet wird, welches die Teigstücke ohne Zwischenbehandlung in den Nachgärschrank überführt.

10. Gebäckherstellungsanlage nach einem der vorhergehenden Ansprüche, dadurch gekennzeichnet, daß die Übergabestation (100) ein Transportband (148) zum Transport der Teigstücke besitzt.

11. Gebäckherstellungsanlage nach Anspruch 10, dadurch gekennzeichnet, daß das Transportband (148) durch eine Walze (203) angetrieben wird, die ihrerseits über ein Kettenrad von der Kette (90) des Vorgärschrankes angetrieben wird.

12. Gebäckherstellungsanlage nach Anspruch 10 oder 11, dadurch gekennzeichnet, daß das Transportband (148) eine Stufe (16, 26, 12, 9) bildet, über die die Teigstücke herabfallen.

13. Gebäckherstellungsanlage nach einem der Ansprüche 10-12, dadurch gekennzeichnet, daß die Übergabestation (100) ein um eine Achse (82) schwenkbar gelagertes Rohr (19) umfaßt, mit dem die Teigstücke auf dem Niveau der oberen Stufe (16) auf das Transportband (148) angedrückt werden können oder nicht.

14. Gebäckherstellungsanlage nach Anspruch 13, dadurch gekennzeichnet, daß die Verschwenkung des Rohres (19) um die Achse (82) durch ein Handrad (86), eine Schnecke (83), und ein Schneckenrad (84) erfolgt.

15. Gebäckherstellungsanlage nach Anspruch 14 dadurch gekennzeichnet, daß das Handrad (86) eine Positionsanzeige besitzt.

16. Gebäckherstellungsanlage nach einem der vorhergehenden Ansprüche, dadurch gekennzeichnet, daß der vordere Teil (121) der Übergabestation (100) um eine Achse (12) abschwenkbar ist.

**Claims**

1. Apparatus for processing pieces of dough, comprising a transfer station (100) for transferring moulded or unmoulded pieces of dough from a prefermenting cabinet (101) to a station (6; 4; 2; 3, 109) for further processing, **characterized in** that the transfer station (100) is adjustable in height to a plurality of positions for delivering pieces of dough to a plurality of stations (6; 4; 2; 3, 109) for further processing.

2. Apparatus for processing pieces of dough according to claim 1, characterized in that the transfer station (100) is moved by at least one spindle (72, 73), at least one nut (65) being in engagement therewith and being connected to the transfer station.

3. Apparatus for processing pieces of dough according to any of the preceding claims, characterized in that one of the stations for further processing is constituted by a conveyor belt (6) for delivering unmoulded pieces of dough, optionally via a further conveyor belt (103), onto at least one baking tin (105).

4. Apparatus for processing pieces of dough according to any of the preceding claims, characterized in that one of the stations for further processing is constituted by a delivery belt (2) which moves horizontally and at right angles to the direction of movement of the transfer station (100).

5. Apparatus for processing pieces of dough according to any of the preceding claims, characterized in that one of the stations for further processing is constituted by a stippling station (4).

6. Apparatus for processing pieces of dough according to claim 5, characterized in that the stippling station (4) is succeeded by a conveyor belt (5) for delivering the pieces of dough to an afterfermenting cabinet.

7. Apparatus for processing pieces of dough according to claim 5 or 6, characterized in that the stippling station (4) is succeeded by a conveyor belt (5) for delivering the pieces of dough onto at least one baking tin (105), optionally via a further conveyor belt (103).

8. Apparatus for processing pieces of dough according to claim 6 or 7, characterized in that the conveyor belt (5) which succeeds the stippling station (4) is pivotally movable about a horizontal axis (106) for a delivery of the pieces of dough either to the afterfermenting cabinet or onto at least on baking tin.

9. Apparatus for processing pieces of dough according to any of the preceding claims, characterized in that one of the stations for further processing is constituted by a conveyor belt (3) for delivering unmoulded pieces of dough to the afterfermenting cabinet without any intermediate processing.

10. Apparatus for processing pieces of dough according to any of the preceding claims, characterized in that the transfer station (100) comprises a conveyor belt (148) for conveying the pieces of dough.

11. Apparatus for processing pieces of dough according to claim 10, characterized in that the conveyor belt (148) is driven by a pulley (203) which is driven via a chain sprocket by the chain (90) of the prefermenting cabinet.

12. Apparatus for processing pieces of dough according to claim 10 or 11, characterized in that the conveyor belt (148) constitutes a step (16, 26, 12, 9) over which the pieces of dough fall down.

13. Apparatus for processing pieces of dough according to any of claims 10 to 12, characterized in that the transfer station (100) comprises a tube (19), which is pivotally mounted on an axle (82) and which is adapted to selectively urge the pieces of dough on the level of the upper step (16) against the conveyor belt (148).

14. Apparatus for processing pieces of dough according to claim 13, characterized in that the tube (19) is pivotally movable about said axle (82) by means of a handwheel (86), a worm (83), and a worm wheel (84).

15. Apparatus for processing pieces of dough according to claim 14, characterized in that the handwheel (86) is provided with a position indicator.

16. Apparatus for processing pieces of dough according to any of the preceding claims, characterized in that the forward part (121) of the transfer station (100) is adapted to be swung about an axle (12).

**Revendications**

1. Installation de fabrication de patisserie dans laquelle les pâtons façonnés ou non façonnés sont transférés de l'armoire de préfermentation (101) par une station de transfert (100) à une station de traitement ultérieur (6; 4; 2; 3, 109) caractérisée en ce que la station de transfert (100) est déplaçable en hauteur dans plusieurs positions pour l'alimentation de plusieurs stations de traitement ultérieur (6; 4; 2; 3, 109).

2. Installation de fabrication de patisserie selon la revendication 1 , caractérisée en ce que le déplacement de la station de transfert (100) s'effectue par au moins une tige filetée tournante (72,73) avec laquelle est en prise au moins un écrou de tige filetée tournante (65) qui est relié à la station de transfert.

3. Installation de fabrication de patisserie selon l'une des revendications précédentes, caractérisée en ce qu'une station de traitement ultérieur est formée par une bande transporteuse (6) pour des pâtons non façonnés laquelle transfère les pâtons, éventuellement par l'intermédiaire d'une autre bande transporteuse (103), à au moins une tôle de cuisson (105).

4. Installation de fabrication de patisserie selon l'une des revendications précédentes, caractérisée en ce qu'une station de traitement ultérieur est formée par une bande d'évacuation (2) qui se meut horizontalement et perpendiculairement à la direction de mouvement de la station de transfert (100).

5. Installation de fabrication de patisserie selon l'une des revendications précédentes, caractérisée en ce qu'une station de traitement ultérieur est formée par une station de marquage (4).

6. Installation de fabrication de pâtisserie selon la revendication 5, caractérisée en ce qu'à la station de marquage (4) se raccorde une bande transporteuse (5) qui transporte les pâtons jusqu'à l'armoire de post-fermentation.

7. Installation de fabrication de pâtisserie selon la revendication 5 ou 6, caractérisée en ce qu'à la station de marquage (4) se raccorde une bande transporteuse (5) qui transporte les pâtons éventuellement par l'intermédiaire d'une autre bande transporteuse (103) jusqu'à au moins une tôle de cuisson (105).

8. Installation de fabrication de pâtisserie selon la revendication 6 ou 7, caractérisée en ce que la bande transporteuse (5), adjacente à la station de marquage (4), est montée de façon à pouvoir pivoter autour d'un axe horizontal (106) pour délivrer les pâtons soit à l'armoire de post-fermentation ou à au moins une tôle de cuisson.

9. Installation de fabrication de pâtisserie selon l'une des revendications précédentes, caractérisée en ce qu'une station de traitement ultérieur est formée par une bande transporteuse (3) pour pâtons non façonnés, laquelle transfère les pâtons dans l'armoire de post-fermentation sans traitement intermédiaire.

10. Installation de fabrication de pâtisserie selon l'une des revendications précédentes, caractérisée en ce que la station de transfert (100) possède une bande transporteuse (148) pour le transport des pâtons.

11. Installation de fabrication de pâtisserie selon la revendication 10, caractérisée en ce que la bande transporteuse (148) est entraînée par un cylindre (203) qui, de son côté, est entraîné par l'intermédiaire d'une roue de chaîne par la chaîne (90) de l'armoire de préfermentation.

12. Installation de fabrication de pâtisserie selon la revendication 10 ou 11, caractérisée en ce que la bande transporteuse (148) forme un gradin (16,26,12,9) par-dessus lequel tombent les pâtons.

13. Installation de fabrication de pâtisserie selon l'une des revendications 10 à 12, caractérisée en ce que la station de transfert (100) comprend un tube (19) monté de façon à pouvoir pivoter autour d'un axe (82) et par lequel les pâtons peuvent ou non être pressés sur la bande transporteuse (148) au niveau du gradin supérieur (16).

14. Installation de fabrication de pâtisserie selon la revendication 13, caractérisée en ce que le pivotement du tube (19) autour de l'axe (82) s'effectue par un volant manuel (86), une vis sans fin (83) et une roue tangente de vis sans fin (84).

15. Installation de fabrication de pâtisserie selon la revendication 14, caractérisée en ce que le volant manuel (86) possède une indication de position.

16. Installation de fabrication de pâtisserie selon l'une des revendications précédentes, caractérisée en ce que la partie avant (121) de la station de transfert (100) peut pivoter vers le bas autour d'un axe (12).

FIG.1

EP 0 249 899 B1

FIG. 2

FIG.3

FIG.4

FIG.5

FIG.6